# FASCICULE DE BREVET EUROPEEN

(11) **EP 1 220 762 B1**
(45) Date de publication et mention de la délivrance du brevet: **17.01.2007**
(21) Numéro de dépôt: 00967970.5
(22) Date de dépôt: 06.10.2000
(51) Int. Cl.: B60N 3/02

(54) **STRUCTURE DE PRISE D'APPUI ET DE RETENUE POUR LES PASSAGERS D'UN VEHICULE DE TRANSPORT EN COMMUN**
STÜTZE- UND HALTE-STRUKTUR FÜR DIE INSASSEN EINES NAHVERKEHRSFAHRZEUGES
SUPPORT AND RESTRAINT STRUCTURE FOR PASSENGERS OF PUBLIC TRANSPORT VEHICLES

(30) Priorité: 12.10.1999 FR 9912854
(43) Date de publication de la demande: 10.07.2002
(73) Titulaire: LOHR INDUSTRIE, 67980 Hangenbieten (FR)
(72) Inventeur: MANDART, Didier, F-67800 Bischheim (FR); LOHR, Robert, F-67980 Hangenbieten (FR); ANDRE, Jean-Luc, F-67210 Obernai (FR)
(74) Mandataire: Metz, Paul
(86) Numéro de dépôt international: PCT/FR2000/002785
(87) Numéro de publication internationale: WO 2001/026926

(56) Documents cités:
- EP-A- 0 176 423
- DE-B- 1 116 079
- DE-U- 29 903 905
- FR-A- 2 310 727
- US-A- 3 843 192
- US-A- 4 073 036

## Description

La présente invention se rapporte à un support de prise d'appui et de retenue pour les passagers d'un véhicule de transport en commun voyageant debout, leur permettant de se tenir afin d'éviter tout déséquilibre ou chute dangereuse malgré les perturbations liées au roulage.

Les véhicules de transport de passagers et notamment les véhicules de transport en commun urbains tels que par exemple les autobus, tramways et métropolitains, sont aménagés afin d'accueillir des passagers voyageant à la fois en position assise et en position debout, la prédisposition du véhicule à la station debout permettant de transporter un nombre plus important de personnes notamment pendant les heures de pointes.

De ce fait, les véhicules de transport en commun sont en général pourvus de dispositifs d'appui et de retenue permettant aux passagers voyageant debout de se tenir pendant les virages, les freinages ou les accélérations du véhicule afin de ne pas être déséquilibrés et d'éviter toute chute ou bousculade pouvant être dangereuse pour leur sécurité ou celle des passagers proches.

Le but de l'invention est de fournir une structure de prise d'appui et de retenue, à installer par exemple sur le côté d'un siège de véhicule de transport de passagers, et dont la forme est particulièrement avantageuse.

Deux types de dispositifs sont utilisés de façon classique dans les véhicules de transports en commun actuels : les poignées et les barres de retenue.

Les poignées de maintien, conformées en boucle permettant la préhension dans leur partie inférieure, sont montées suspendues au plafond du véhicule. Elles peuvent être réalisées au moyen d'une lanière flexible comme celle décrite dans la demande de brevet FR 2.401.796, ou d'un corps rigide à la manière des poignées de maintien divulguées dans les demandes FR 2.471.881 et WO 93/02891. Ces poignées peuvent, selon les cas, être fixes ou articulées en partie supérieure au niveau de leur fixation.

Les poignées de maintien suspendues ne sont utilisables chacune que par un seul passager. De plus, leur hauteur est fixe et ne peut s'adapter à la taille des différents usagers. Ainsi, les enfants ou les adultes de petites tailles ne peuvent généralement pas les attraper. Au contraire, ces poignées peuvent représenter une gêne pour les passagers de grande taille pour lesquels elles arrivent au niveau de la tête. En dehors de ces deux cas extrêmes, la hauteur fixe de la poignée conduit souvent à une position inconfortable pour le passager.

Au contraire, le dispositif de retenue selon l'invention comporte une zone de prise d'appui particulièrement étendue permettant à plusieurs passagers de se tenir simultanément sans se gêner mutuellement, ni gêner les passagers assis à proximité. Il peut de plus, être saisi sur une gamme importante et continue de hauteurs, procurant ainsi un appui confortable du passager quelle que soit sa taille.

On connaît également des barres de retenue fixées aux sièges des passagers. Certaines s'étendent en saillie dans la prolongation du plan du dossier. Elles sont alors transversales au couloir de passage, diminuant ainsi l'espace libre et gênant par là, la circulation des voyageurs.

D'autres s'étendent au-dessus de l'extrémité supérieure du dossier du siège passager. Il s'agit par exemple du dispositif décrit dans le brevet EP 0.167.680. Dans ce cas, la zone d'appui offerte est limitée et ne permet en général qu'à un seul passager de se tenir. La longueur utile de ces barres se trouve ainsi très réduite en pratique. De plus, l'utilisation de ce type de barre d'appui est souvent gênante pour le voyageur assis sur le siège.

On connaît également des barres d'appui verticales, comme celles décrites dans les brevets EP 0.769.416, FR 2.445.780 et WO 95/16258. Si ces barres peuvent avantageusement être disposées contre une paroi ou dans un espace libre important du véhicule, elles ne sont pas du tout adaptées à être placées dans un couloir de circulation entre des rangées de sièges, car leur encombrement important diminue de façon significative le volume utile au transport des passagers.

On connaît aussi des structures de frise d'appui constituées par un cadre vide, tel que décrit dans l'introduction du document DE-U1-29903905.

Contrairement à ces systèmes connus, l'invention enseigne une structure de prise d'appui et de retenue d'encombrement réduit, présentant une zone utile de prise d'appui pratiquement totale permettant à plusieurs passagers de l'utiliser simultanément et confortablement.

Pour résoudre ce problème technique, la structure de prise d'appui selon l'invention comporte les caracteristiques de la revendication 1 est constituée d'un périmètre fermé tubulaire de forme par exemple en boucle elliptique. Ce dispositif est de préférence fixé sur le côté d'un siège d'un véhicule de transport en commun ou monté sur une structure de carrosserie, le plan de l'ellipse étant perpendiculaire au dossier de ce siège, c'est-à-dire latérale au siège. Ainsi, la structure de prise d'appui selon l'invention ne gêne ni le passager assis sur le siège servant de support de fixation, ni les passagers voulant circuler à l'intérieur du véhicule.

La structure de prise d'appui et de retenue selon l'invention est d'une taille relativement importante et s'étend bien au dessus de l'extrémité supérieure du dossier du siège lui servant de support de fixation. Il offre ainsi une zone de prise d'appui particulièrement étendue à la fois en hauteur et en largeur, pouvant être utilisée confortablement et simultanément par plusieurs passagers quelle que soit leur taille. Cependant, grâce à sa forme et à sa disposition avantageuse, il n'occupe qu'un emplacement réduit.

Le dispositif de prise d'appui selon l'invention peut comporter en outre un ou plusieurs tube(s) par exemple horizontal(aux), s'étendant transversalement à l'intérieur de l'ellipse, et augmentant encore la surface de prise d'appui disponible.

Le dispositif de prise d'appui selon l'invention est particulièrement bien adapté pour être fixé contre le côté d'un siège. Cependant, il peut tout aussi bien être placé contre un pilier, une paroi, un montant de structure de carrosserie ou tout autre endroit approprié du véhicule.

La forme générale du cadre, celle incurvée de ses branches ainsi que celles arrondie de ses coins et des zones de préhension garantissent une meilleure sécurité des utilisateurs lors de la préhension et des chocs car les surfaces ne peuvent blesser par le seul contact avec le corps.

D'autres caractéristiques et avantages de l'invention apparaîtront à la lecture de la description détaillée qui va suivre, description faite en référence aux dessins annexés, dans lesquels :
- la figure 1 est une vue en perspective de la structure de prise d'appui selon l'invention dans sa version de base ;
- la figure 2 est une vue en perspective de la structure de prise d'appui selon l'invention dans sa version renforcée ;
- la figure 3 est une vue en perspective de la structure d'appui montée sur le flanc d'un siège ;
- la figure 4 est une vue en perspective d'un compartiment d'entrée d'un véhicule de transport en commun montrant plusieurs structures d'appui selon l'invention dont une montée sur un montant de structure de carrosserie et l'autre sur une paroi.

La structure d'appui et de retenue selon l'invention est plus particulièrement mais non exclusivement destinée à venir équiper l'intérieur d'un véhicule de transport en commun notamment urbain à l'usage des passagers restant debout aussi bien dans l'allée près des sièges que dans le compartiment d'entrée ou bien dans un autre endroit.

La structure de prise d'appui et de retenue se présente sous la forme d'un cadre 1 de préférence quadrangulaire et réalisé par exemple en un profilé lisse et de forme adaptée par exemple un tube métallique de section circulaire.

Le cadre présente une multitude de zones d'appui ou de préhension sans saillies agressives sur toute la longueur de son périmètre.

A cet effet, et plus particulièrement les angles de ce cadre sont arrondis. Deux angles opposés peuvent être très ouverts faisant que les deux côtés adjacents de ces deux angles opposés forment deux branches incurvées se rejoignant par leurs extrémités.

Dans le mode de réalisation représenté sur les figures et pris comme exemple descriptif, ce cadre affecte une forme générale ovale ou en ellipse à deux branches incurvées 2 et 3 ouvertes l'une vers l'autre et à extrémités 4 et 5. Les extrémités des branches 2 et 3 sont réunies entre elles pour former les extrémités arrondies du cadre selon deux angles fermés pour constituer le périmètre de forme ovale ou elliptique du cadre.

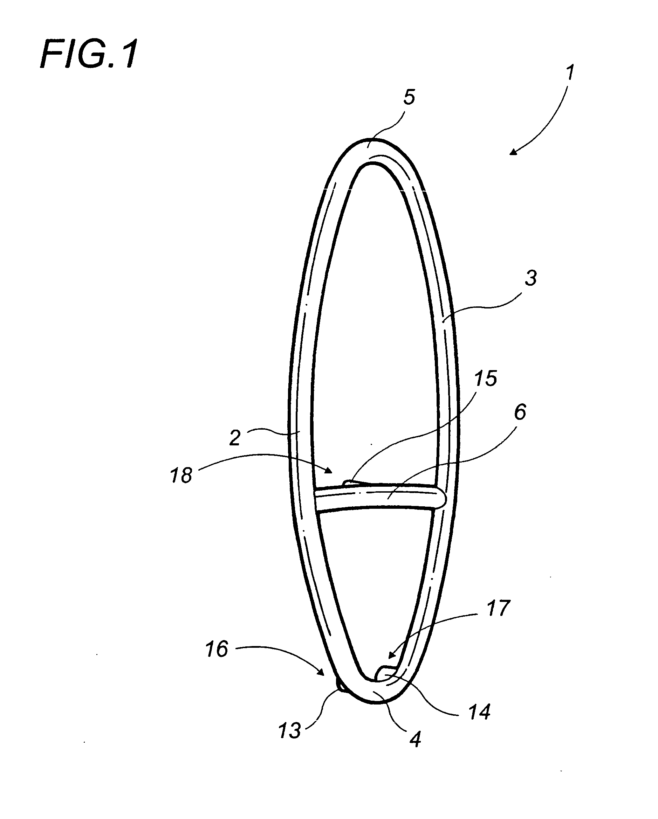

Selon une première variante, les branches sont réunies entre elles en demi partie inférieure du cadre par une traverse 6 droite ou légèrement incurvée vers le haut (figure 1).

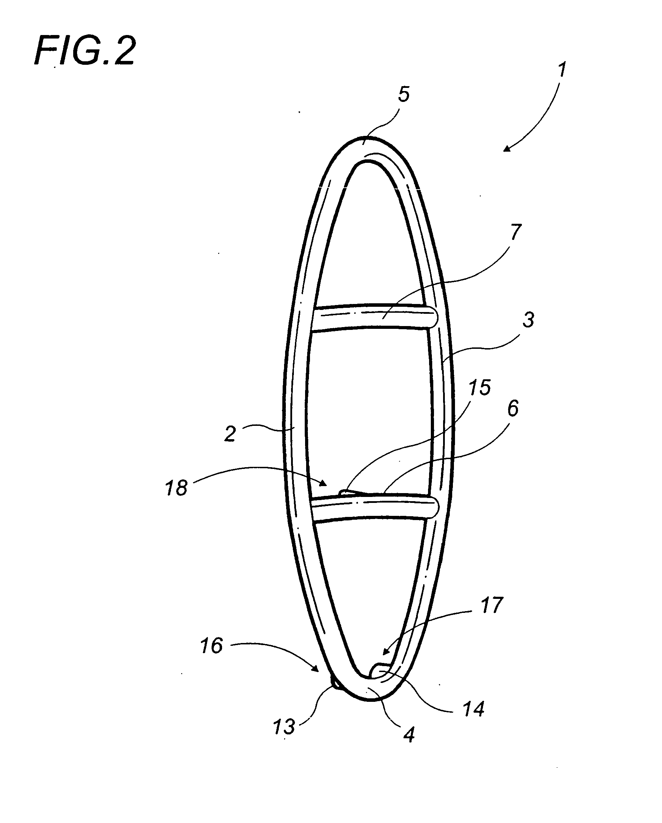

Selon une deuxième variante comme celle représentée sur la figure 2, la traverse inférieure 6 est doublée par une traverse supérieure 7 qui constitue par exemple son symétrique par rapport à un plan transversal perpendiculaire médian.

La structure d'appui et de retenue selon l'invention est destinée à être fixée par exemple sur un flanc 8 d'un siège 9. Elle sert aux passagers voyageant en position debout dans l'allée centrale. Elle peut être déportée ou fixée à une paroi 10 ou à un montant 11 de structure de la carrosserie du véhicule par exemple dans le compartiment d'entrée 12 d'une voiture ou d'un module de rame.

Elle se trouve toujours disposée en position latérale par rapport à son support de fixation et montée à une distance suffisante de ce support pour assurer une prise d'appui confortable et un maintien en équilibre efficace des personnes l'utilisant.

A cet effet, la partie inférieure comporte en saillie transversale vers l'arrière, par exemple trois éléments de fixation 13, 14 et 15 par l'intermédiaire desquels la structure de prise d'appui se trouve montée solidement fixée à distance sur son support par exemple un flanc 8 d'un siège 9 ou sur un montant 11 de structure de carrosserie.

Les moyens de fixation, par exemple au nombre de trois, sont intégrés aux sièges ou aux montants, par exemple par des ensembles vis-écrou ou par des tiges filetées coopérant avec des inserts.

On peut noter une fixation basse selon deux points au niveau de la partie inférieure et une autre fixation par exemple au milieu de la traverse inférieure 6. Cette fixation en trois points assure un maintien solide de l'ensemble de la structure d'appui permettant à sa partie supérieure en porte-à-faux de rester quasi fixe malgré la force d'appui des quelques passagers pouvant l'empoigner pour s'en servir comme prise d'appui.

Une fixation en deux points peut convenir également à condition que les deux points soient suffisamment distants l'un de l'autre sur la même branche ou sur deux branches différentes.

Pour faciliter la prise, il importe que la structure de prise d'appui soit distante d'un intervalle suffisant du support sur lequel elle est fixée. A cet effet, les éléments de fixation présentent une prolongation ou une pièce d'entretoise. Il peut s'agir aussi comme représenté, de bossages tels que 16, 17 et 18 conformés sur l'arrière des extrémités du cadre et de la traverse 6 au droit du passage de chaque élément de fixation. La forme préférée de ces bossages est telle que chaque face frontale de ceux-ci constitue une surface de portée contre le support sur lequel la structure de prise d'appui est montée.

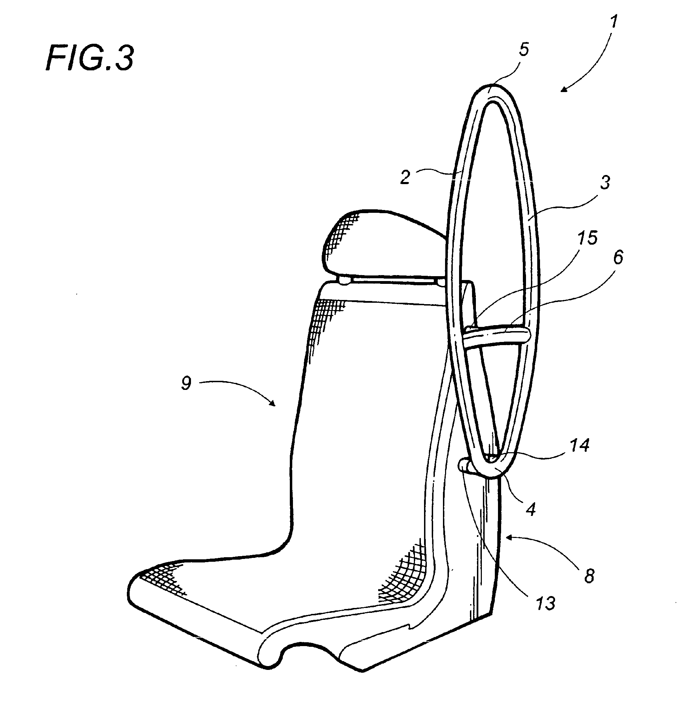

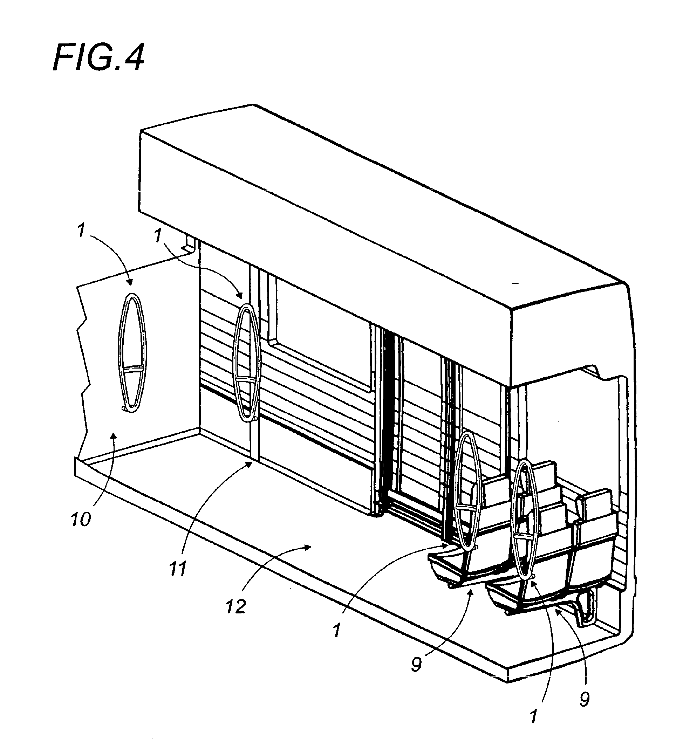

Comme on peut le voir sur les figures 3 et 4, la structure de prise d'appui selon l'invention offre de très nombreux endroits sur tout son périmètre et sur sa ou ses traverse(s) 6 ou 7 pour que chaque passager petit ou grand, enfant ou adulte puisse bénéficier d'une prise d'appui efficace à un niveau adapté à sa taille.

La forme tubulaire des branches procure l'avantage de pouvoir empoigner la structure d'appui de façon efficace, la main d'un adulte pouvant se refermer sur celle-ci. Par ailleurs, la surface latérale des branches est parfaitement lisse. La forme arrondie des coins supprime tout risque de blessure en cas de choc consécutif à une poussée ou à une projection provenant du roulage ou d'une bousculade.

Pour améliorer le confort des personnes assises, le cadre de prise d'appui selon l'invention est déporté vers l'allée à une certaine distance du siège ce qui évite une trop grande proximité.

## Revendications

1. Structure de prise d'appui et de retenue pour les passagers d'un véhicule de transport en commun voyageant debout composée d'un cadre (1) à deux coins arrondis définissant un plan libre et traversant pour les mains, le cadre (1) étant fixé à un support distant d'un intervalle de celui-ci et en position latérale par rapport à ce support, **caractérisée en ce que**, le cadre (1) est constitué d'un profilé de grande hauteur offrant une gamme importante et continue de zones de préhension et d'appui, à main fermée et sans saillies agressives, confortables pour un ou plusieurs passagers quelle que soit sa taille.

2. Structure de prise d'appui selon la revendication 1, **caractérisée en ce que** le cadre (1) est fixé en position latérale sur un flanc (8) d'un siège (9).

3. Structure de prise d'appui selon la revendication 1, **caractérisée en ce que** le cadre (1) est fixé en position latérale sur une paroi (10).

4. Structure de prise d'appui selon la revendication 1, **caractérisée en ce que** le cadre (1) est fixé en position latérale sur un montant (11) de structure de carrosserie.

5. Structure de prise d'appui selon la revendication 1, **caractérisée en ce que** le profilé constituant le cadre (1) est un profilé tubulaire de section circulaire.

6. Structure de prise d'appui selon la revendication 1, **caractérisée en ce que** le cadre (1) est formé de deux branches incurvées (2, 3) réunies entre elles à chacune de leurs extrémités selon des coins arrondis (4, 5).

7. Structure de prise d'appui selon la revendication 1, **caractérisée en ce que** la forme du cadre (1) est ovale.

8. Structure de prise d'appui selon la revendication 1, **caractérisée en ce que** la forme du cadre (1) est en ellipse.

9. Structure de prise d'appui selon l'une quelconque des revendications précédentes, **caractérisée en ce que** le cadre (1) présente une traverse (6) en partie inférieure.

10. Structure de prise d'appui selon l'une quelconque des revendications précédentes de 1 à 8, **caractérisée en ce que** le cadre (1) présente une traverse (6) en partie inférieure et une traverse (7) en partie supérieure.

11. Structure de prise d'appui selon l'une quelconque des revendications précédentes, **caractérisée en ce que** le cadre (1) présente au moins des fixations en partie inférieure.

12. Structure de prise d'appui selon la revendication 9 et 11, **caractérisée en ce que** le cadre (1) présente trois fixations (14, 15, 16) dont l'une sur la traverse (6).

13. Structure de prise d'appui selon la revendication 1, **caractérisée en ce que** le plan du cadre (1) est maintenu distant du support par une conformation arrière en relief au droit des fixations au support.

## Claims

1. A support and restraint structure for passengers standing on a public urban transport vehicle, comprising a frame (1) with two rounded corners defining a plane free for the hands to get through, the frame (1) being attached to a support separated from it by a space and laterally positioned relative to said support, **characterized in that** the frame (1) consists of a large height profile offering a considerable and continuous range of gripping and support zones without any abrupt projections allowing to grab the frame element through the encircled space of the frame and close the hand around, comfortable for one or more passengers of any height.

2. A support structure according to claim 1
**characterized in that** the frame (1) is attached in a lateral position to the side (8) of a seat (9).

3. A support structure according to claim 1 **characterized in that** the frame (1) is attached in a lateral position to a wall (10).

4. A support structure according to claim 1 **characterized in that** the frame (1) is attached in a lateral position to a vertical element (11) of the body structure.

5. A support structure according to claim 1
**characterized in that** the section that constitutes the frame (1) is a tubular element that is circular in section.

6. A support structure according to claim 1
**characterized in that** the frame (1) is formed of two curved branches (2) and (3) joined to each other at each extremity with rounded corners (4) and (5).

7. A support structure according to claim 1
**characterized in that** the shape of the frame (1) is oval.

8. A support structure according to claim 1
**characterized in that** the shape of the frame (1) is elliptical.

9. A support structure according to any one of the preceding claims **characterized in that** the frame (1) has a cross-bar (6) at the lower portion.

10. A support structure according to any one of preceding claims 1-8 **characterized in that** the frame (1) has a cross-bar (6) at the lower portion and a cross-bar (7) at the upper portion.

11. A support structure according to any one of the preceding claims **characterized in that** the frame (1) has attachments on at least its lower portion.

12. A support structure according to claims 9 and 11 **characterized in that** the frame (1) has three attachments (14) (15) and (16), one of which is located on the cross-bar (6).

13. A support structure according to claim 1 **characterized in that** the plane of the frame (1) is kept apart from the support by a raised portion in the rear above the attachments to the support.

## Patentansprüche

1. Stütz- und Haltestruktur für im Stehen reisende Fahrgäste eines öffentlichen Verkehrsfahrzeugs, welche aus einem Rahmen (1) mit zwei abgerundeten Ecken gebildet ist, der eine für die Hände freie und durchgreifende Ebene festlegt, wobei der Rahmen (1) derart an einem Träger befestigt ist, dass er um einen Abstand von demselben entfernt und in seitlicher Position bezüglich des Trägers angeordnet ist, **dadurch gekennzeichnet, dass** der Rahmen (1) aus einem Profil mit großer Höhenabmessung gebildet ist, welches bei geschlossener Hand und ohne aggressiven Vorsprünge ein umfangreiches und kontinuierliches Angebot an Stütz-und Haltebereichen bietet, die für einen oder eine Mehrzahl an Fahrgästen beliebiger Größe bequem sind.

2. Stützstruktur nach Anspruch 1, **dadurch gekennzeichnet, dass** der Rahmen (1) in seitlicher Position an einer Seite (8) eines Sitzes (9) befestigt ist.

3. Stützstruktur nach Anspruch 1, **dadurch gekennzeichnet, dass** der Rahmen (1) in seitlicher Position an einer Wand (10) befestigt ist.

4. Stützstruktur nach Anspruch 1, **dadurch gekennzeichnet, dass** der Rahmen (1) in seitlicher Position an einem Pfosten (11) der Karosseriestruktur befestigt ist.

5. Stützstruktur nach Anspruch 1, **dadurch gekennzeichnet, dass** das Profil, welches den Rahmen (1) bildet, ein Rohrprofil mit kreisförmigem Querschnitt ist.

6. Stützstruktur nach Anspruch 1, **dadurch gekennzeichnet, dass** der Rahmen (1) aus zwei gekrümmten Ästen (2, 3) gebildet ist, die an jedem ihrer Enden durch abgerundete Ecken (4, 5) miteinander verbunden sind.

7. Stützstruktur nach Anspruch 1, **dadurch gekennzeichnet, dass** der Rahmen (1) eine ovale Form aufweist.

8. Stützstruktur nach Anspruch 1, **dadurch gekennzeichnet, dass** der Rahmen (1) eine elliptische Form aufweist.

9. Stützstruktur nach einem der vorangehenden Ansprüche, **dadurch gekennzeichnet, dass** der Rahmen (1) in seinem unteren Abschnitt eine Querverbindung (6) aufweist.

10. Stützstruktur nach einem der Ansprüche 1 bis 8, **dadurch gekennzeichnet, dass** der Rahmen (1) in seinem unteren Abschnitt eine Querverbindung (6) und in seinem oberen Abschnitt eine Querverbindung (7) aufweist.

11. Stützstruktur nach einem der vorangehenden Ansprüche, **dadurch gekennzeichnet, dass** der Rahmen (1) zumindest einige Befestigungen in seinem unteren Abschnitt aufweist.

12. Stützstruktur nach Anspruch 9 und 11, **dadurch gekennzeichnet, dass** der Rahmen (1) drei Befestigungen (14, 15, 16) aufweist, von welchen eine auf der Querverbindung (6) angeordnet ist.

13. Stützstruktur nach Anspruch 1, **dadurch gekennzeichnet, dass** die Ebene des Rahmens (1) durch rückwärtige, erhabene Formgebungen, welche den Befestigungen des Trägers zugeordnet sind, von dem Träger entfernt gehalten ist.
